# EUROPÄISCHE PATENTSCHRIFT

(11) **EP 3 281 569 B1**
(45) Veröffentlichungstag und Bekanntmachung des Hinweises auf die Patenterteilung: **04.07.2018**
(21) Anmeldenummer: 16183381.9
(22) Anmeldetag: 09.08.2016
(51) Int. Cl.: A47J 31/44, A47J 31/54

(54) **MODULARE SCHAUMEINHEIT**
MODULAR FOAM UNIT
UNITÉ DE MOUSSAGE MODULAIRE

(43) Veröffentlichungstag der Anmeldung: 14.02.2018
(73) Patentinhaber: CUP&CINO Kaffeesystem-Vertrieb GmbH & Co. KG, 33161 Hövelhof (DE)
(72) Erfinder: Epping, Frank Josef Paul, 33161 Hövelhof (DE)
(74) Vertreter: BOVARD AG

(56) Entgegenhaltungen:
- EP-A1- 2 583 596
- EP-A1- 2 987 435
- EP-A1- 3 023 037
- EP-A1- 3 042 592
- WO-A1-2011/115925
- WO-A1-2014/205771
- WO-A2-2004/062443

## Beschreibung

Die Erfindung beschreibt eine Vorrichtung zum Schäumen einer Flüssigkeit, insbesondere von Milch oder Milchersatz.

Die sich entwickelte Kaffeekultur und der damit verbundene Kultstatus eines Kaffeegetränks haben zu einem breit gefächerten Angebot an kaffeehaltigen Getränken geführt. Mittlerweile steht für die Zubereitung von Kaffeegetränken eine Vielzahl von Kaffeemaschinen zur Verfügung, welche von einem manuellen System bis zu einem Vollautomaten reichen. Die mit den Kaffeemaschinen herstellbaren Kaffeespezialitäten umfassen auch Getränke wie Cappuccino, Latte Macchiato oder Café Latte, welche zur Zubereitung Milch und Milchschaum benötigen. Hierzu ist eine Bevorratung von Milch in oder bei einer Kaffeemaschine notwendig, welches aus Gründen der Haltbarkeit, der Frische und Hygiene eine Kühlung erforderlich macht.

Aus dem Stand der Technik sind diverse Milchkühlvorrichtungen bekannt, die zum Einbau in einen Getränkebereiter, insbesondere in einer Kaffeemaschine, oder zum externen Anschluss an einen Getränkebereiter, insbesondere als Beistellgerät, ausgebildet sind. Um Frische und Hygiene offener Milch über einen längeren Zeitraum aufrechterhalten zu können, wird Milch idealerweise bei 4°C gelagert. Vergleichbares gilt für einen sogenannten Milchersatz.

Ebenfalls bekannt sind diverse Vorrichtungen zur Milchschaumzubereitung, welche in der Kaffeemaschine oder auch als Beistellgerät Verwendung finden und welche entweder warmen bzw. heissen oder kalten Milchschaum erzeugen. Zur Erzeugung von warmem bzw. heissem Milchschaum umfassen Milchschäumer im Allgemeinen einen Vorratsbehälter, in dem die Milch erwärmt wird. Von dem Vorratsbehälter wird die Milch mittels einer Pumpe über eine Leitung einer Auslassdüse zugeleitet und dabei in geeigneter Weise in einem Luftanreicherungselement mit Luft angereichert bzw. durchsetzt. Dies ist im Hinblick auf die Haltbarkeit der bevorrateten Milch nachteilig und durch eine erhöhte Keimbildung insbesondere in dem Leitungssystem und den mit der Milch in Berührung kommenden Elementen problematisch. Die Erzeugung eines kalten Milchschaums erfolgt in der Regel in einem separaten System.

Aus DE 10 2008 058 934 A1 ist ein Milchschäumer bekannt, umfassend einen Vorratsbehälter aus dem Flüssigkeit entnehmbar ist, einer Pumpe und einer Auslassdüse, sowie einem Luftanreicherungselement, mittels dem Flüssigkeit mit Luft durchsetzbar ist. Die derart angereichte Milch wird an einer Auslassdüse durch ein Sieb gepresst, so dass ein stabiler Schaum entsteht. Dem Luftaufbereitungselement nachgeordnet ist ein Wärmetauscher, welcher entweder als Durchlauferhitzer zur Erzeugung warmen Milchschaums oder als Kühlelement zur Erzeugung kalten Milchschaums ausgebildet ist. Zur Steuerung der Kühlleistung des Wärmetauschers ist ein Temperaturfühler vorgesehen, um das Kaltgetränk auf 1 °C bis 5°C zu kühlen. Ein kombiniertes Gerät zur wahlweisen Erzeugung von Heiss- und Kaltschaum wird nicht beschrieben.

Aus WO 2008/083941 A1 ist ein Milchschaumsystem bekannt zur Erzeugung von kaltem Milchschaum und von warmem Milchschaum. Kalte Milch wird aus einem Behälter angesaugt, eventuell mit einem bestimmten Anteil von Luft gemischt und einem Auslass zugeführt. Ferner ist vorgesehen, dass in der Auslassleitung ein über ein Ventil wahlweise einschaltbarer Parallelabschnitte vorgesehen ist, in welchem ein Durchlauferhitzer angeordnet ist, um wahlweise kalte oder heisse Milch bzw. kalten oder heissen Milchschaum zu erzeugen. Dieses System umfasst ein aufwendigeres Leitungs- und Ventilssystem, welches einen höheren Reinigungsaufwand erforderlich macht.

Aus EP 3 042 592 A1 ist eine Vorrichtung zur Erzeugung von kaltem, warmem und heissem Milchschaum bekannt, wobei hierfür unterschiedliche Strömungswege und Einrichtungen vorgesehen sind. So ist ein Wärmeüberträger in einem Strömungsweg zur Erzeugung von warmem Milchschaum integriert und in einem davon getrennten Strömungsweg ist eine Einrichtung zum Zuführen von Dampf für heissen Milchschaum vorgesehen.

Es ist Aufgabe der vorliegenden Erfindung eine eingangs genannte Vorrichtung derart auszubilden, dass eine kompakte Vorrichtung zur wahlweisen Erzeugung von Heiss/Warm- und Kaltschaum bereitsteht. Die kompakte Vorrichtung ist in einer Moduleinheit umfasst, welche in einer Kühleinrichtung anordenbar ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäss der Erfindung ist die Vorrichtung zum Schäumen von Flüssigkeit geeignet, insbesondere von Milch und/oder Milchersatz. Die Begriffe Milch und Milchersatz umfassen diejenigen Produkte, welche zur Zubereitung eines Heissgetränks, insbesondere von Kaffeegetränken und/oder Milchgetränken, geeignet sind, beispielsweise Vollmilch, fettreduzierte Milch, Sojamilch, Mandelmilch, etc..

Die Vorrichtung zum Schäumen von Flüssigkeit umfasst mindestens einen Vorratsbehälter, in dem die zu schäumende Flüssigkeit bevorratet ist, eine Pumpe, ein Leitungssytem mit mindestens einer ersten Leitung, über welche der mindestens eine Vorratsbehälter mit der Pumpe und mit einer zweiten Leitung, über welche die Pumpe mit mindestens einer Auslassdüse verbindbar sind, einem Luftanreicherungselement, mittels welchem die Flüssigkeit mit Luft durchsetzbar ist und ein als Durchlauferhitzer gestaltetes Heizelement. Insbesondere ist eine einzige zweite Leitung vorgesehen, und das Heizelement, ausgebildet als Dickschichtheizung, ist an der einzigen zweiten Leitung angeordnet, wobei ein elektrischer Heizwiderstand auf einem Träger aufgebracht ist, an welchem für die Flüssigkeit ein Strömungsweg vorgesehen ist.

Die Vorrichtung zum Schäumen von Flüssigkeit ist in einem Gehäuse aufgenommen, an welchem Durchführungen für Leitungen von Fluiden und Anschlüsse vorgesehen sind. Insbesondere ist die Vorrichtung mit weiteren Einrichtungen verbindbar, beispielsweise zur elektrischen Kontaktierung und/oder zur Kontaktierung mit einer Steuereinheit. Die Vorrichtung umfasst neben einer Luftansaugvorrichtung ein Leitungssystem mit einer oder mehreren ersten Leitungen, um sie mit mindestens einem Vorratsbehälter lösbar zu verbinden, in dem mindestens eine zu schäumende Flüssigkeit bevorratet ist. Aus dem mindestens einen Vorratsbehälter ist die bevorratete Flüssigkeit mittels einer Pumpe entnehmbar. Ferner ist die Pumpe über eine zweite Leitung mit mindestens einer Auslassdüse verbunden, an der der erzeugte Flüssigkeitsschaum entnehmbar ist. Die Auslassdüse kann beispielsweise an einer Kaffeemaschine, insbesondere an einem Kaffeevollautomaten, vorgesehen sein.

Beispielsweise ist vorgesehen, dass die Vorrichtung zum Schäumen von Flüssigkeit mit mindestens zwei Vorratsbehältern in Verbindung steht. So kann wahlweise aus einem ersten Vorratsbehälter Vollmilch und aus einem zweiten fettarme Milch, Sojamilch, Reismilch oder anderer Milchersatz entnommen werden. In der mindestens einen ersten Leitung, welche den oder die Vorratsbehälter mit der Pumpe verbindet, ist mindestens ein Ventil angeordnet, um wahlweise Flüssigkeit aus dem einen oder anderen Vorratsbehälter entnehmen zu können.

Die aus dem mindestens einen Vorratsbehälter entnommene Flüssigkeit wird mit Luft, beispielsweise drucklos aus der Umgebung entnommen, in einem entsprechend ausgebildeten Luftanreicherungselement angereichert, wodurch die Flüssigkeit aufschäumt und einen stabilen Schaum bildet. Umfasst sind beispielsweise ein Proportionalventil mit einer Düse, wobei vorzugsweise intermittierend bzw. gepulst Luft angesaugt wird.

Ferner umfasst die Vorrichtung zum Schäumen von Flüssigkeit ein Heizelement, welches in Strömungsrichtung der Flüssigkeit hinter der Pumpe und hinter dem Luftanreicherungselement angeordnet ist. Die bereits mit Luft angereicherte Milch kann in dem Heizelement erwärmt bzw. erhitzt werden, welches sich vorteilhaft für die Aufschäumung der Milch und die Ausbildung eines stabilen Schaums auswirkt.

Als sehr vorteilhaft erweist sich die Ausbildung des Heizelements in Form eines Durchlauferhitzers, welches in ein Leitungssystem der Vorrichtung einfach integriert werden kann. Hierdurch kann die Vorrichtung kompakt und platzsparend ausgebildet werden.

Erfindungsgemäss basiert das Heizelement auf der Dickschichttechnologie. Ein derartiges Heizelement ist beispielsweise in EP 2 163 130 A beschrieben. Das Heizelement ist geeignet zum Erwärmen von Flüssigkeiten, wobei auf einem Träger in einer Heizzone in Dickschichttechnik, ein elektrischer Heizwiderstand aufgebracht und ein der Heizzone zugeordneter Temperatursensor angeordnet ist. Ferner sind entsprechende elektrische Anschlüsse zur elektrischen Kontaktierung des elektrischen Heizwiderstands und des Temperatursensors vorgesehen. Mit einem derartigen Heizelement ist eine sehr schnelle Regelung möglich bei gleichzeitig hoher Prozesssicherheit und einer günstigen Kosten- und Energieeffizienz.

An dem Träger des Heizelements ist in geeigneter Weise ein Strömungsweg für die zu erwärmende Flüssigkeit vorgesehen, beispielsweise in Form eines spiralförmig angeordneten Durchlaufwegs. Hierbei wird die aus dem mindestens einen Vorratsbehälter entnommene Flüssigkeit, welche insbesondere gekühlt ist, über einen Zulauf zugeführt, entlang eines von aussen nach innen verlaufenden spiralförmigen Durchlaufwegs einem Ablauf zugeleitet und entlang des Strömungswegs auf eine geeignete Temperatur erhitzt, vorzugsweise in einem Temperaturbereich von 50°C bis 80°C. Mit einem derart aufgebauten Heizelement und kurzen Leitungen ist eine kompakte Bauweise realisierbar, so dass das Heizelement platzsparend in die erfindungsgemässe Vorrichtung anordenbar ist.

Das Heizelement der erfindungsgemässen Vorrichtung zum Schäumen von Flüssigkeit bietet den Vorteil, dass seine Wärmeentwicklung minimal ist, d.h. die von ihm in die Umgebung abgegebene Wärme sehr gering ist. Dadurch kann die erfindungsgemässe Vorrichtung mit dem integrierten Heizelement in einer Kühleinrichtung platziert werden. Die von dem Heizelement abgegebene Wärme ist dabei derart begrenzt, dass die Kühlung nicht oder nur geringfügig beeinflusst wird.

Für eine verbesserte Haltbarkeit der Milch und aus hygienischen Gründen ist es bevorzugt, dass die Vorrichtung zum Schäumen von Flüssigkeit, insbesondere Milch, in einer Kühleinrichtung aufnehmbar ist. So ist bevorzugt, dass die erfindungsgemässe Vorrichtung zum Schäumen von Flüssigkeit derart in einer Kühleinrichtung aufnehmbar ist, dass die Anschlüsse für eine elektrische Kontaktierung und zu einer Steuereinheit mit einer in der Kühleinrichtung vorgesehenen Kupplungseinheit verbindbar sind. Die Kühleinrichtung kann als ein Beistellgerät einer Kaffeemaschine, insbesondere eines Kaffeevollautomaten, gestaltet sein oder auch als eine unabhängige Kühleinrichtung, welche mittels entsprechender Anschlüsse mit einer Kaffeemaschine verbindbar ist.

In einer Ausführungsform ist die erfindungsgemässe Vorrichtung zum Schäumen von Flüssigkeit in einer Moduleinheit aufnehmbar, welche in die Kühleinrichtung einsetzbar ist, beispielsweise einschiebbar oder steckbar. Ferner umfasst die Moduleinheit Mittel für eine elektrische Kontaktierung und stellt eine luftdichte Verbindung zu den bereitgestellten Flüssigkeiten bereit. Die Moduleinheit umfasst den mindestens einen Vorratsbehälter, welcher austauschbar in der Moduleinheit aufgenommen ist. Eine in der Moduleinheit aufgenommene Vorrichtung zum Schäumen von Flüssigkeit ist mit dem mindestens einen Vorratsbehälter verbindbar. Vorzugsweise ist vorgesehen, dass in die Moduleinheit anstatt oder alternativ ein Behälter mit einer Spüllösung für einen Reinigungszyklus einsetzbar ist.

Für die Erzeugung von Kaltschaum wird gekühlte Milch dem mindestens einen Vorratsbehälter entnommen und mit Luft angereichert. Die aufbereitete Milch strömt entlang des Strömungswegs und passiert das ausgeschaltete Heizelement zur mindestens einen Auslassdüse. Durch die Anordnung der Vorrichtung bzw. der Moduleinheit in einer Kühleinrichtung verläuft weitgehend der gesamte Strömungsweg der zu schäumenden bzw. geschäumten Milch in einer gekühlten Umgebung.

Aufgrund des erfindungsgemässen Aufbaus ist das Heizelement, bis auf eine kurze Phase während des eingeschalteten Zustands, weitgehend auf Umgebungstemperatur temperiert. So ist es möglich, dass hintereinander mit der erfindungsgemässen Vorrichtung zum Schäumen von Flüssigkeit zuerst Warmschaum erzeugt wird und im Anschluss daran mit derselben Vorrichtung Kaltschaum. Die erfindungsgemässe Vorrichtung zum Schäumen von Flüssigkeit ist geeignet für beide Milchschäume, wodurch ein einfaches System realisierbar ist und keine zwei getrennten Vorrichtungen mit entsprechenden Anschlüssen, Elementen und Leitungen notwendig sind. Insbesondere kann bei der Erzeugung von Warmschaum aus dem mindestens einen Vorratsbehälter zu schäumende Flüssigkeit entnommen, mit Luft angereichert und in dem eingeschalteten Heizelement während der Durchströmung auf eine gewünschte Temperatur erwärmt werden. Das Heizelement wird abgeschaltet, wenn die gewünschte Menge an Milchschaum das Heizelement passiert hat. Vorzugsweise wird das Heizelemente vor dem Ende des Prozesses des Milchschäumens abgeschaltet, wobei kalte nachströmende Flüssigkeit, insbesondere kalte Milch, Milchersatz oder Wasser, das Heizelement kühlt. Alternativ kann das Heizelement auch durch Spülung mit kaltem Wasser im Rahmen eines Spülvorgangs abgekühlt werden. Der Vorgang des Abkühlens des Heizelement erfolgt in einer kurzen Zeitspanne, beispielsweise innerhalb von etwa 3 sec.. So ist das Heizelement kalt, abgesehen von der kurzen Heizphase. Dies ist darüber hinaus optimal, um einer mit steigender Temperatur stark zunehmenden Keimbildung und Kontamination entgegen zu wirken. Ferner ist es nicht notwendig, die durch das Heizelement entstandene Aufheizenergie durch aufwendige Vorkehrungen aus dem System zu bringen.

Eine weitere Problematik von Vorrichtungen zum Schäumen von Flüssigkeiten, insbesondere von Milch, ist die aufwendige Reinigung einer derartigen Vorrichtung. Sowohl während eines laufenden Betriebs sind zyklische Spülungen erforderlich als auch eine intensive Tagesendreinigung. Zyklische Spülungen von Leitungen des Leitungssystems als auch derjenigen Elemente, welche mit Milch in Berührung kommen, z.B. der Pumpe, des Heizelements etc., führen in der Regel zu hohen Wasser- und Milchverlusten. Die Integration der erfindungsgemässen Vorrichtung zum Schäumen von Flüssigkeit in einer Kühleinrichtung minimiert die Keimbildung, so dass Reinigungszyklen mit einer geringeren Frequenz durchgeführt werden können. Ferner sind durch die mit der erfindungsgemässen Vorrichtung realisierbare kompakte Bauweise die Leitungswege deutlich verkürzt, wodurch weniger Verluste bei einem Reinigungszyklus entstehen.

In einer Ausführungsform kann die erfindungsgemässe Vorrichtung zum Schäumen von Flüssigkeit anstatt mit dem mindestens einen Vorratsbehälter mit einem Behälter verbunden werden, in dem eine Spüllösung bevorratet ist. Diese kann beispielsweise Wasser und/oder eine saure oder alkalische Reinigungslösung sein. In einem Reinigungszyklus kann mittels der Pumpe durch das Leitungssystem der Vorrichtung Spüllösung gespült werden, beispielsweise auch im Kreislauf, d.h. die Spüllösung wird über entsprechende Ventile und Anschlüsse zurück in den Behälter der Spüllösung geführt. Bei einem Reinigungszyklus können somit die mit der zu schäumenden Flüssigkeit in Kontakt stehenden Elemente sowie das Ventil am Lufteinlass gereinigt werden.

In einer Ausführungsform der erfindungsgemässen Vorrichtung zum Schäumen von Flüssigkeiten ist ein Leitwertsensor in dem Leitungssystem angeordnet, so dass über den ermittelten Leitwert bestimmt werden kann, welche Flüssigkeit sich in dem Leitungssystem befindet, d.h. Luft, Wasser, Spüllösung. Ferner kann ermittelt werden, ob eine ausreichende Reinigung durchgeführt worden ist.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
Fig. 1 eine schematische Blockdarstellung einer ersten erfindungsgemässen Anordnung und
Fig. 2 eine schematische Blockdarstellung einer zweiten erfindungsgemässen Anordnung während eines Reinigungszykluses.

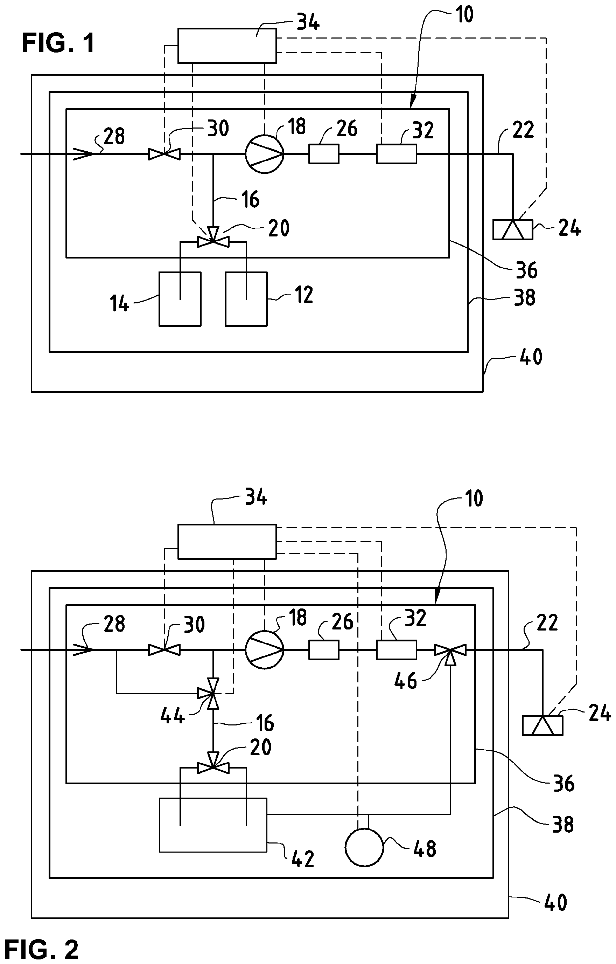

In Fig. 1 ist eine Vorrichtung zum Schäumen von Flüssigkeit mit 10 bezeichnet. Wie Fig. 1 entnommen werden kann, ist in einem ersten Vorratsbehälter 12 Milch eines Typs bevorratet und in einem zweiten Vorratsbehälter 14 Milch eines anderen Typs bzw. Milchersatz. Die ersten und zweiten Vorratsbehälter 12, 14 sind über eine erste Leitung 16 mit einer Pumpe 18 verbunden. In der ersten Leitung 16 ist ein Ventil 20 angeordnet, so dass wahlweise Milch oder Milchersatz aus dem ersten oder dem zweiten Vorratsbehälter 12, 14 entnommen werden kann. Die Pumpe 18 ist auf ihrer Druckseite über eine zweite Leitung 22 mit einer Auslassdüse 24 verbunden. So kann Milch oder Milchersatz aus einem der ersten oder zweiten Vorratsbehälter 12, 14 der Auslassdüse 24 zugeführt werden.

In der zweiten Leitung 22 ist ein Luftanreicherungselement 26 aufgenommen. Über eine Luftzufuhrleitung 28 mit einem Ventil 30 kann über eine nicht näher dargestellte Einlassöffnung Luft angesaugt werden, welche die angesaugte Flüssigkeit anreichert.

In der zweiten Leitung 22 ist ein als Durchlauferhitzer ausgestaltetes Heizelement 32 angeordnet. An dem Heizelement 32 ist ein spiralförmiger Strömungsweg für die mit Luft angereicherte Milch vorgesehen. Bei der Strömung entlang des Strömungswegs wird die angereicherte Milch bei eingeschaltetem Heizelement 32 auf eine vorbestimmte Temperatur erwärmt bzw. erhitzt. Die Temperatur kann mittels eines Temperatursensors geregelt werden.

Zur Steuerung der Vorrichtung ist eine Steuereinheit 34 vorgesehen, welche mit einzelnen Elementen der Vorrichtung 10 verbunden ist, beispielsweise den Ventilen 20, 30, der Pumpe 18, dem Heizelement 32 und der Auslassdüse 24. Mittels der Steuereinheit 34 kann die Erzeugung einer Portion Milchschaum veranlasst werden, wobei die Luftmenge, die Menge und der Typ der Milch sowie die Temperatur des Milchschaums bestimmt werden kann.

In Fig. 1 ist angedeutet, dass die Vorrichtung 10 zum Schäumen von Milch in einem Gehäuse 36 angeordnet ist. Nur schematisch angedeutet ist ferner, dass das Gehäuse in einer mit 38 bezeichneten Moduleinheit aufgenommen ist. In der Moduleinheit 38 sind die ersten und zweiten Vorratsbehälter 12, 14 aufgenommen. Die Vorrichtung 10 zum Schäumen von Milch und die Moduleinheit 38 werden erfindungsgemäss in einer Kühleinrichtung aufgenommen, welche in Fig. 1 mit Bezugszeichen 40 angedeutet ist. Ersichtlich ist, dass quasi alle Bestandteile der Vorrichtung 10 zum Schäumen der Milch in der Kühleinrichtung 40 aufgenommen sind, wobei die Milch in den ersten und zweiten Vorratsbehältern 12, 14 und im Wesentlichen im Leitungssystem der Vorrichtung 10 zum Schäumen von Flüssigkeit gekühlt ist. Dabei kann die Kühleinrichtung 40 als ein Beistellgerät zu einer Kaffeemaschine oder auch als integraler Bestandteil einer Kaffeemaschine ausgebildet sein.

Zur Erzeugung eines warmen Schaums wird das Heizelement 32 mittels eines Steuerbefehls der Steuereinheit 34 eingeschaltet, so dass sich die durchströmende Milch erwärmt und aus der Kühleinrichtung 40 heraus der ausserhalb der Kühleinrichtung 40 befindlichen Auslassdüse 24 zugeleitet wird.

Die Erzeugung von Kaltschaum erfolgt in derselben Vorrichtung 10 zum Schäumen von Flüssigkeiten, wobei lediglich das Heizelement 32 ausgeschaltet ist. Durch die vorteilhafte Ausgestaltung kann das Heizelement 32 als Element der Vorrichtung 10 zum Schäumen von Flüssigkeit in der Kühleinrichtung 40 angeordnet sein, da seine Abwärme im eingeschalteten Zustand minimal ist.

In Fig. 2 ist eine schematische Blockdarstellung der Vorrichtung 10 zum Schäumen von Milch in einer zweiten Ausführungsform dargestellt. Elemente der zweiten Ausführungsform, welche denjenigen der ersten Ausführungsform entsprechen sind mit gleichen Bezugszeichen bezeichnet. In Fig. 2 ist anstelle der ersten und zweiten Vorratsbehälter 12, 14 ein Behälter 42 in der Moduleinheit 38 aufgenommen und mit der Vorrichtung 10 zum Schäumen von Flüssigkeit über die erste Leitung 16 verbunden. In dem Behälter 42 ist eine Spüllösung bevorratet, welche ein zyklisches Spülen des Leitungssystems und der Elemente der Vorrichtung 10 zum Schäumen von Flüssigkeit ermöglicht und/oder für eine Tagesendreinigung ein entsprechendes Reinigungsmittel bevorratet. Ein von der Steuereinheit 34 ausgehender Steuerbefehl ermöglicht die Entnahme der Spüllösung aus dem Behälter 42, wobei Ventile 44, 46 vorgesehen sind, um die Spüllösung durch das Leitungssystem derart zu spülen, dass alle mit der Milch in Berührung kommende Elemente gespült und gereinigt werden können. Insbesondere kann Ventil 46 derart eingestellt sein, dass die Spüllösung im Kreislauf geführt werden kann. Ferner ist in Fig. 2 ein Leitwertsensor 48 in dem Spülkreislauf angeordnet. Mittels des Leitwertsensors 48 kann verifiziert werden, welche Flüssigkeit sich im Leitungssystem der Vorrichtung 10 zum Schäumen von Flüssigkeit befindet. Insbesondere kann ein Nachweis erbracht werden, ob ein Reinigungszyklus sattgefunden hat.

## Patentansprüche

1. Vorrichtung (10) zum Schäumen von Flüssigkeit, umfassend:
- mindestens einen Vorratsbehälter (12, 14), in welchem die zu schäumende Flüssigkeit bevorratet ist,
- eine Pumpe (18),
- ein Leitungssystems mit mindestens einer ersten Leitung (16), über welche der mindestens eine Vorratsbehälter (12, 14) mit der Pumpe (18) und mit einer zweiten Leitung (22), über welche die Pumpe (18) mit mindestens einer Auslassdüse (24) verbindbar sind,
- einem Luftanreicherungselement (26), mittels welchem die Flüssigkeit mit Luft durchsetzbar ist, und
- ein als Durchlauferhitzer gestaltetes Heizelement (32),
**dadurch gekennzeichnet, dass**
eine einzige zweite Leitung (22) vorgesehen ist, und dass das Heizelement (32) als Dickschichtheizung ausgebildet ist, wobei an dem Heizelement (32) ein elektrischer Heizwiderstand auf einem Träger aufgebracht ist, an welchem für die Flüssigkeit ein Strömungsweg vorgesehen ist.

2. Vorrichtung (10) nach Anspruch 1, umfassend ein Gehäuse (36) zur Aufnahme der Vorrichtung (10) mit Anschlüssen, welche eine elektrische Kontaktierung und eine Verbindung zu einer Steuereinheit (34) bereitstellen und mit Durchführungen für die Leitungen (16, 22) des Leitungssystems.

3. Vorrichtung (10) nach einem der Ansprüche 1 bis 2, **dadurch gekennzeichnet, dass** die zu schäumende Flüssigkeit Milch oder Milchersatz ist.

4. Vorrichtung nach einem der Ansprüche 1 bis 3, wobei die Vorrichtung (10) in einer Kühleinrichtung (40) aufnehmbar ist.

5. Vorrichtung (10) nach Anspruch 4, wobei die Vorrichtung (10) in einer Moduleinheit (38) aufnehmbar ist, welche in der Kühleinrichtung (40) einsetzbar ist und in welcher der mindestens eine Vorratsbehälter (12, 14) aufgenommen ist.

6. Vorrichtung (10) nach Anspruch 4, **dadurch gekennzeichnet, dass** an der Kühleinrichtung (40) ein Kupplungsmodul vorgesehen ist, zur Verbindung einer Steuereinheit (34) mit der Vorrichtung (10) und zur elektrischen Kontaktierung der Vorrichtung (10).

7. Vorrichtung (10) nach einem der Ansprüche 4 bis 6, **dadurch gekennzeichnet, dass** die Kühleinrichtung (40) ein Beistellgerät eines Getränkebereiters ist, bevorzugt einer Kaffeemaschine, besonders bevorzugt eines Kaffeevollautomaten.

8. Vorrichtung (10) nach einem der Ansprüche 1 bis 7, **dadurch gekennzeichnet, dass** bei ausgeschaltetem Heizelement (32) Kaltschaum erzeugt wird.

9. Vorrichtung (10) nach einem der Ansprüche 1 bis 7, **dadurch gekennzeichnet, dass** bei eingeschaltetem Heizelement (32) Warmschaum erzeugt wird.

10. Vorrichtung (10) nach einem der Ansprüche 5 bis 9, **dadurch gekennzeichnet, dass** in die Moduleinheit (38) ein Behälter (42) aufnehmbar ist, welcher mit einer Spüllösung gefüllt ist.

11. Vorrichtung (10) nach Anspruch 10, **dadurch gekennzeichnet, dass** die Vorrichtung (10) über die mindestens eine erste Leitung (16) mit dem Behälter (42) für die Spüllösung verbindbar ist.

12. Vorrichtung (10) nach Anspruch 11, **dadurch gekennzeichnet, dass** das Leitungssystem, die Pumpe (18), das Luftanreicherungselement (26) und das Heizelement (32) mittels der im Kreislauf gepumpten Spüllösung gespült wird.

13. Vorrichtung (10) nach einem der Ansprüche 1 bis 12, **dadurch gekennzeichnet, dass** ein Leitwertsensor (48) zur Bestimmung des Leitwerts einer im Leitungssytem befindlichen Flüssigkeit.

## Claims

1. Device (10) for foaming liquid, comprising:
- at least one storage container (12, 14), in which the liquid to be foamed is stored,
- a pump (18),
- a line system with at least one first line (16), via which the at least one storage container (12, 14) is connectible to the pump (18) and with a second line (22), via which the pump (18) is connectible to at least one outlet nozzle (24),
- an air-enrichment element (26), by means of which the liquid is able to be permeated by air, and
- a heating element (32) designed as continuous flow heater,
**characterized in that**
a single second line (22) is provided and **in that** the heating element (32) is designed as thick-film heater, whereby on the heating element (32) an electric heating resistor is installed on a carrier at which a flow path is provided for the liquid.

2. Device (10) according to claim 1, comprising a housing (36) for receiving the device (10) with connections that make available an electric contacting and a connection to a control unit (34) and with ducts for the lines (16, 22) of the line system.

3. Device (10) according to one of the claims 1 to 2, **characterized in that** the liquid to be foamed is milk or milk substitute.

4. Device according to one of the claims 1 to 3, the device (10) being able to be received in a cooling unit (40).

5. Device (10) according to claim 4, the device (10) being able to be received in a modular unit (38), which is insertable in a cooling unit (40) and in which the at least one storage container (12, 14) is received.

6. Device (10) according to claim 4, **characterized in that** provided on the cooling unit (40) is a coupling module, for connection of a control unit (34) to the device (10) and for electrical contacting of the device (10).

7. Device (10) according to one of the claims 4 to 6, **characterized in that** the cooling unit (40) is an auxiliary device of a beverage maker, preferably a coffee machine, especially preferably a fully automatic coffee maker.

8. Device (10) according to one of the claims 1 to 7, **characterized in that** with switched-off heating element (32) cold foam is produced.

9. Device (10) according to one of the claims 1 to 7, **characterized in that** with switched-on heating element (32) warm foam is produced.

10. Device (10) according to one of the claims 5 to 9, **characterized in that** receivable in the modular unit (38) is a container (42) which is filled with rinsing solution.

11. Device (10) according to claim 10, **characterized in that** via the at least one first line (16) the device (10) is connectible to the container (42) for the rinsing solution.

12. Device (10) according to claim 11, **characterized in that** the line system, the pump (18), the air-enrichment element (26) and the heating element (32) are rinsed by means of the rinsing solution pumped in the circuit.

13. Device (10) according to one of the claims 1 to 12, **characterized in that** a conductance sensor (48) <is provided> for determining the conductance value of a liquid present in the line system.

## Revendications

1. Dispositif (10) pour faire mousser un liquide, comprenant :
- au moins un réservoir (12, 14), dans lequel le liquide à faire mousser est stocké,
- une pompe (18),
- un système de canalisation comprenant au moins une première conduite (16), via laquelle ledit au moins un réservoir (12, 14) peut être relié à la pompe (18), et une deuxième conduite (22), via laquelle la pompe (18) peut être reliée à au moins une buse de sortie (24),
- un élément d'enrichissement en air (26), au moyen duquel le liquide peut être aéré, et
- un élément chauffant (32) conçu comme un chauffe-eau instantané,
**caractérisé en ce que**
une seule deuxième conduite (22) est prévue et **en ce que** l'élément chauffant (32) est conçu sous forme d'un film épais, une résistance de chauffage électrique étant installée, au niveau de l'élément chauffant (32), sur un support dans lequel une voie d'écoulement est aménagée pour le liquide.

2. Dispositif (10) selon la revendication 1, comprenant un boîtier (36) pour loger le dispositif (10), qui est pourvu de raccordements fournissant un contact électrique et une connexion à une unité de contrôle (34), et de canaux pour les conduites (16, 22) du système de canalisation.

3. Dispositif (10) selon l'une des revendications 1 à 2, **caractérisé en ce que** le liquide à faire mousser est du lait ou un substitut de lait.

4. Dispositif (10) selon l'une des revendications 1 à 3, le dispositif (10) pouvant être logé dans une unité de refroidissement (40).

5. Dispositif (10) selon la revendication 4, le dispositif (10) pouvant être logé dans une unité modulaire (38), qui peut être insérée dans l'unité de refroidissement (40) et dans laquelle ledit au moins un réservoir (12, 14) est logé.

6. Dispositif (10) selon la revendication 4, **caractérisé en ce qu'**un module de couplage est prévu sur l'unité de refroidissement (40) pour la connexion d'une unité de contrôle (34) au dispositif (10) et pour la connexion électrique au dispositif (10).

7. Dispositif (10) selon l'une des revendications 4 à 6, **caractérisé en ce que** l'unité de refroidissement (40) est un dispositif auxiliaire d'un distributeur de boissons, de manière préférée d'une machine à café et de manière et plus particulièrement préférée d'un distributeur de café complètement automatique.

8. Dispositif (10) selon l'une des revendications 1 à 7, **caractérisé en ce qu'**une mousse froide est produite lorsque l'élément chauffant (32) est éteint.

9. Dispositif (10) selon l'une des revendications 1 à 7, **caractérisé en ce qu'**une mousse chaude est produite lorsque l'élément chauffant (32) est allumé.

10. Dispositif (10) selon l'une des revendications 5 à 9, **caractérisé en ce qu'**un récipient (42) peut être logé dans l'unité modulaire (38), lequel est rempli d'une solution de rinçage.

11. Dispositif (10) selon la revendication 10, **caractérisé en ce que** le dispositif (10) peut être connecté au réservoir (42) par ladite au moins une première conduite (16) pour la solution de rinçage.

12. Dispositif (10) selon la revendication 11, **caractérisé en ce que** le système de canalisation, la pompe (18), l'élément d'enrichissement en air (26) et l'élément chauffant (32) sont rincés au moyen de la solution de rinçage pompée dans le circuit.

13. Dispositif (10) selon l'une des revendications 1 à 12, **caractérisé en ce qu'**un capteur de conductibilité (48) est prévu pour déterminer la valeur de conductance d'un liquide présent dans le système de canalisation.
